# EUROPÄISCHE PATENTSCHRIFT

(11) **EP 2 250 006 B1**
(45) Veröffentlichungstag und Bekanntmachung des Hinweises auf die Patenterteilung: **26.04.2017**
(21) Anmeldenummer: 08872122.0
(22) Anmeldetag: 18.11.2008
(51) Int. Cl.: B27B 5/29

(54) **KAPPSÄGE MIT NEIGUNGSVERSTELLUNG**
CIRCULAR SAW WITH ADJUSTABLE INCLINATION
SCIE CIRCULAIRE À RÉGLAGE D'INCLINAISON

(30) Priorität: 07.02.2008 DE 202008001745 U
(43) Veröffentlichungstag der Anmeldung: 17.11.2010
(73) Patentinhaber: Metabowerke GmbH, 72622 Nürtingen (DE)
(72) Erfinder: WINKLER, Stefan, 49757 Lahn (DE)
(74) Vertreter: Lorenz, Markus
(86) Internationale Anmeldenummer: PCT/EP2008/009742
(87) Internationale Veröffentlichungsnummer: WO 2009/097879

(56) Entgegenhaltungen:
- US-A1- 2004 089 125
- US-A1- 2006 060 048

## Beschreibung

Die Erfindung betrifft eine Kappsäge mit den Merkmalen des Oberbegriffs von Anspruch 1. Eine solche Kappsäge ist der US2004/0089125 A1 zu entnehmen.

Kappsägen der in Rede stehenden Art sind seit Jahrzehnten bekannt (EP-A-1 557 231). Sie werden zur Bearbeitung aller Arten von Werkstoffen eingesetzt. Ein besonderes Anwendungsfeld finden Kappsägen bei der Holzbearbeitung. Sie sind aber auch für die Kunststoffbearbeitung und die Metallbearbeitung zu finden.

Eine typische Kappsäge hat ein um eine Querachse schwenkbar angebrachtes Sägeaggregat, dessen Sägeblatt aus einer angehobenen Ruhestellung in eine abgesenkte Sägestellung und umgekehrt schwenkbar ist. Mit dieser Bewegung des Sägeblattes kann ein auf einer Werkstückauflagefläche eines Trägers befindliches Werkstück abgeschnitten - gekappt - werden.

Kappsägen sind aber nicht nur mit um eine Querachse schwenkbar angebrachtem Sägeaggregat bekannt, sondern auch mit einem in Längsrichtung über die Werkstückauflagefläche ziehbaren Sägeaggregat als sog. Radialarmsägen.

Das Sägeaggregat einer Kappsäge ist normalerweise in Richtung der Ruhestellung vorgespannt. Das geschieht meist durch eine Federanordnung, bei älteren Konstruktionen auch noch durch ein Gegengewicht. Entgegen der Vorspannkraft wird das Sägeaggregat an einem Betätigungshandgriff angefaßt und zum Ausführen des Sägeschnittes nach unten geschwenkt bis das auf der Werkstückauflagefläche befindliche Werkstück vollständig durchtrennt ist. Dabei tritt ein kleines Teilstück des Sägeblattes des Sägeaggregates randseitig in einen Eintauchschlitz in der Werkstückauflagefläche ein.

Die DE-U-203 13 885 offenbart eine Kapp-, Gehrungs- und Zugsäge, mit der Kappschnitte, Gehrungsschnitte und Schifterschnitte (Doppel-Gehrungs-Schnitte) ausgeführt werden können. Wegen der außerdem wie bei einer Radialarmsäge realisierten Zugfunktion können die ausgeführten Schnitte länger sein als es der wirksame Schnitthalbmesser des Sägeblattes vorgibt.

Bei der bekannten Kappsäge ist das Sägeaggregat mittels einer Halterung am Träger angebracht. Bei der Kappfunktion wird das Sägeaggregat um eine Querachse aus der angehobenen Ruhestellung in die abgesenkte Sägestellung und umgekehrt geschwenkt.

An der Halterung, meist zwischen Halterung und Träger, ist hier im übrigen eine Neigungsverstellung vorgesehen. Die Neigungsverstellung dient dazu, das Sägeaggregat gegenüber dem Träger um eine in Sägerichtung verlaufende horizontale Schwenkachse schwenken zu können, um eben einen Gehrungsschnitt in gewünschtem Gehrungswinkel ausführen zu können. Dazu hat die Neigungsverstellung eine Neigungs-Schwenkachse.

Die Neigungsverstellung erlaubt es, das Sägeaggregat gegenüber der Werkstückauflagefläche seitlich zu neigen, so daß entsprechende Gehrungsschnitte mit einem durch die Neigungsverstellung vorgegebenen Gehrungswinkel ausgeführt werden können. Typische Gehrungswinkel wie 45° oder 30° neben dem Winkel ± 0° für die Normalstellung sind durch Bolzen oder Hebel, die von Hand betätigt werden, einrastend fixierbar. Bekannt ist häufig aber auch nur eine stufenlose Verstellung und eine Fixierung mittels einer Spannschraube mit Spannknebel. So ist das auch bei der aus der DE-U-203 13 885 bekannten Kappsäge.

Ist eine einrastende Fixierung bestimmter definierter Neigungspositionen vorgesehen, so ist es meist so, daß die einrastende Fixierung unter Federbelastung erfolgt, während sie durch eine manuelle Handhabung, insbesondere das Rückziehen eines federbelasteten Bolzens, lösbar ist.

Da sich die Neigungsverstellung hinten an der Werkstückauflagefläche bzw. dem Träger befindet, muß man als Bedienungsperson hier sehr aufmerksam sein. Normalerweise erfolgt die manuelle Handhabung zum Lösen der einrastenden Fixierung mit einer Hand hinten an der Halterung, während die andere Hand der Bedienungsperson das Sägeaggregat am Betätigungshandgriff festhält. Die manuelle Betätigung erfordert also den Einsatz beider Hände und mehrere aufeinanderfolgende Handhabungsschritte. Da man nach hinten an das Sägeaggregat bzw. die Halterung greifen muß, besteht immer auch ein gewisses Verletzungsrisiko.

Bei der bekannten Kappsäge ist auch eine Staubabsaugung am Sägeaggregat vorgesehen. Dazu befindet sich an der Kappsäge ein Absaugstutzen. An diesem kann ein Absaugschlauch oder ein Staubfangsack einer Staubfangvorrichtung angeschlossen werden.

Die bekannte, eingangs erläuterte Kappsäge kann mit der oben erläuterten Neigungsverstellung mit einrastender Fixierung häufig benutzter Neigungspositionen ausgerüstet sein. Eine solche Neigungsverstellung hat ein mit dem Träger verbundenes feststehendes Teil und ein mit der Halterung bzw. mit dem Sägeaggregat verbundenes neigungsschwenkbares Teil. Ein Rastelement ist vorzugsweise am feststehenden Teil angeordnet, also dem Träger zugeordnet. Am schwenkbaren Teil ist dann an jeder Stelle, die einer definierten Neigungsposition entspricht, eine zum Rastelement passende Gegenraste vorgesehen.

Grundsätzlich ist es möglich, nur eine definierte Neigungsposition und eine Gegenraste zu haben, die lediglich die Mittelstellung, also den Neigungswinkel 0° definiert. Meist wird es aber so sein, daß man mehrere definierte Neigungspositionen hat und demzufolge auch mehrere, mindestens zwei Gegenrasten vorgesehen sind. Insbesondere Neigungswinkel links und rechts von jeweils 45° sind interessant.

Ein aus der Praxis bekanntes Rastelement für diese Zwecke ist ein Zugdrehknopf, der in Einrastrichtung federbelastet ist. Durch Ziehen am Zugdrehknopf in Längsrichtung wird ein mit der Gegenraste in Eingriff stehender Rastbolzen aus der Gegenraste herausgezogen. Läßt man den Zugdrehknopf wieder los, so schnappt der Rastbolzen unter Federkraft wieder ein. Der Zugdrehknopf kann aber auch um die Längsachse des Rastelementes gedreht werden. Ähnlich einem Bajonettverschluß kommen dadurch Blockierelemente mit einer den Rastbolzen umgebenden Halterung in Eingriff. Das Rastelement in dann in der ausgehobenen Stellung blockiert. Die Blockierung ist nur durch eine weitere manuelle Handhabung wieder lösbar, nämlich durch Ziehen am Zugdrehknopf und Rückdrehen des Zugdrehknopfes in die Stellung, in der die Rückholfeder den Rastbolzen zurück in die Gegenraste drücken kann.

Es hat sich gezeigt, daß die praktische Handhabung der einrastenden Neigungsverstellungen im Stand der Technik noch nicht optimal ist. Daher liegt der Lehre der Erfindung das Problem zugrunde, die manuelle Handhabung der einrastenden Neigungsverstellung zu optimieren.

Die zuvor aufgezeigte Problemstellung ist bei einer Kappsäge mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der Unteransprüche.

Wie im Stand der Technik hat das Rastelement zunächst einen mit einer Rückholfeder in Einrastrichtung federbelasteten, mit der Gegenraste in Eingriff kommenden Rastbolzen. Anders als bei dem aus der Praxis bekannten Stand der Technik ist am Rastbolzen endseitig jedoch ein Rastbetätigungshebel angelenkt. Dieser kann gegenüber dem Rastbolzen also geschwenkt werden. Die Schwenkung des Rastbetätigungshebels erfolgt durch eine Kraftbeaufschlagung an einem Handbetätigungsende desselben.

Der Rastbetätigungshebel des Rastelementes ist bezüglich des Rastbolzens und einer den Rastbolzen führenden Fassung derart angeordnet und ausgebildet, daß, ausgehend von der Einraststellung, in der der Rastbolzen mit der gewünschten Gegenraste in Eingriff steht, zwei unterschiedliche Betätigungen möglich sind. Eine erste Betätigung am Handbetätigungsende, insbesondere ein Ziehen am Handbetätigungsende des Rastbetätigungshebels, hebt den Rastbolzen zwar aus der Gegenraste aus, läßt aber die Federkraft der Rückholfeder dauerhaft auf den Rastbolzen wirken. Damit kehrt bei Freigabe des Handbetätigungsendes des Rastbetätigungshebels der Rastbolzen wieder in Einrastrichtung entweder in die Gegenraste zurück oder wird jedenfalls gegen das mit der Gegenraste versehene Teil gedrückt. Im letztgenannten Fall führt eine weitere Neigungsschwenkung des schwenkbaren Teils gegenüber dem feststehenden Teil dann dazu, daß beim Passieren einer Gegenraste der Rastbolzen unter Federkraft einrastet.

Durch eine der zuvor genannten, ersten Betätigung im wesentlichen entgegengerichtete Betätigung am Handbetätigungsende des Rastbetätigungshebels ist zwar ebenfalls der Rastbolzen aus der Gegenraste gegen Federkraft aushebbar. Hier jedoch führt eine weitere Betätigung am Handbetätigungsende im wesentlichen ohne Änderung der Betätigungsrichtung dazu, daß eine Blockierstellung des Rastbetätigungshebels und damit des Rastbolzens erreicht wird. Die Blockierstellung wird also hier gewissermaßen in einem Zug erreicht, was handhabungstechnisch besonders praktisch ist. Hat der Rastbetätigungshebel auf diesem Wege die blockierte Stellung erreicht, so ist es auch hier so, daß durch eine weitere manuelle Handhabung die Blockierung wieder lösbar ist. In diesem Fall ist es erfindungsgemäß im wesentlichen so, daß eine Betätigung in der Richtung die Blockierung auflöst, in der auch die erste Betätigung erfolgt.

Besonders zweckmäßig wird ein temporäres Ausrasten durch ein Ziehen am Handbetätigungsende des Rastbetätigungshebels verursacht, während ein permanentes Ausrasten durch ein Drücken auf das Handbetätigungsende des Rastbetätigungshebels ausgelöst wird.

Um die gewünschte Blockierung des Rastbetätigungshebels in der ausgehobenen Stellung des Rastbolzens zu erreichen, ist es zweckmäßigerweise so, daß der Rastbetätigungshebel als Kipphebel ausgeführt ist und zur Blockierung in der ausgehobenen Stellung (permanentes Ausrasten) eine entsprechende Formschlußausbildung nahe dem Schwenkgelenk zum Rastbolzen hin aufweist. Demgegenüber hat in der anderen, temporären Ausraststellung der Rastbetätigungshebel nahe dem Schwenkgelenk zum Rastbolzen eine Abrundung oder eine Keilschräge, die eine selbsttätige Rückstellung des Rastbetätigungshebels unter der Federkraft der Rückholfeder bewirkt.

Für die zweckmäßige Bedienbarkeit der Neigungsverstellung ist schließlich nicht nur die Konstruktion des Rastelementes von Bedeutung, sondern auch dessen Anordnung. Dazu ist nach bevorzugter Lehre vorgesehen, daß das Rastelement auf der der Werkstückauflagefläche zugewandten Seite der Halterung angeordnet und der Rastbetätigungshebel von vorne aus über die Werkstückauflagefläche hinweg greifend betätigbar ist. Die besonders einfachen Bewegungsabläufe bei der erfindungsgemäßen Neigungsverstellung erlauben diese vom Zugriff her zweckmäßige Positionierung des Rastelementes.

Insgesamt wird es durch die erfindungsgemäße Konstruktion möglich, die manuelle Handhabung des Rastelementes wesentlich schneller und einfacher zu erledigen. Aufgrund der Kniehebelkonstruktion des Rastelementes ergibt sich eine Getriebeübersetzung. Die anzuwendende Handkraft am Handbetätigungsende des Rastbetätigungshebels ist also deutlich geringer als bei dem aus dem Stand der Technik bekannten Zugdrehknopf. Der Bewegungsablauf ist einheitlich. Man muß also nicht wie früher ziehen und drehen. Vielmehr gibt es entweder nur Ziehen oder entweder nur Drücken als Betätigung. Damit sind auch die beiden Betriebszustände klar und eindeutig trennbar und das ist gut erkennbar.

Im folgenden wird die Erfindung anhand einer lediglich Ausführungsbeispiele darstellenden Zeichnung näher erläutert. Bei der Erläuterung der Zeichnung werden auch weitere Vorteile und Besonderheiten der Erfindung im Detail angesprochen und erläutert. In der Zeichnung zeigt
- Fig. 1: in perspektivischer Darstellung ein Ausführungsbeispiel einer erfindungsgemäßen Kappsäge,
- Fig. 2: die Kappsäge aus Fig. 1 in einer Draufsicht,
- Fig. 3: die Kappsäge aus Fig. 1 in einem Schnitt gemäß III-III in Fig. 2,
- Fig. 4: in vergrößerter Darstellung den Bereich der Neigungsverstellung der Kappsäge aus Fig. 3 (Rasthebel in Normalstellung, eingerastet),
- Fig. 5: in einer Fig. 4 entsprechenden Darstellung den Rasthebel temporär ausgerastet,
- Fig. 6: in einer Fig. 4 entsprechenden Darstellung den Rasthebel permanent ausgerastet.

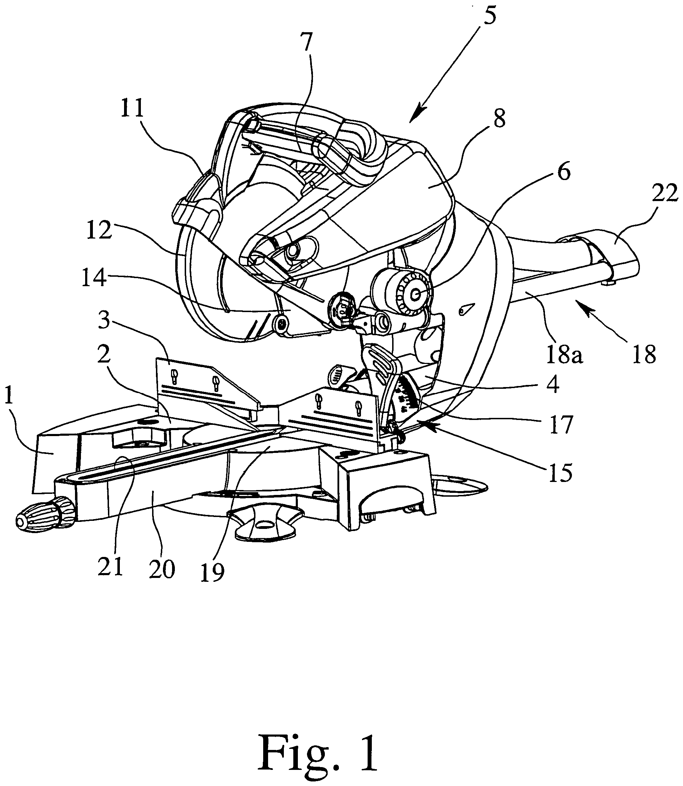

Fig. 1 zeigt eine Kappsäge, genauer gesagt eine Kapp-, Gehrungssäge- und Zugsäge.

Die in Fig. 1 dargestellte Kappsäge weist zunächst einen Träger 1 auf, der eine Werkstückauflagefläche 2 bildet. Das rückwärtige Ende der Werkstückauflagefläche 2 bildet hier eine Anschlagschiene 3, an der ein Werkstück, beispielsweise eine Holzleiste, angelegt werden kann. Am Träger 1 ist eine Halterung 4 angebracht, die rückwärtig hinter der Werkstückauflagefläche 2 liegt.

An der Halterung 4 oberhalb des Trägers 1 angebracht ist ein Sägeaggregat 5. Dieses ist im dargestellten und bevorzugten Ausführungsbeispiel um eine Querachse 6 schwenkbar und befindet sich oberhalb der Werkstückauflagefläche 2.

Bei einer Radialarmsäge entfiele die Querachse. Das Sägeaggregat würde hier an Zugstangen gezogen, die auslegerartig über die Werkstückauflagefläche ragen.

Bei der dargestellten Kappsäge wird das Sägeaggregat 5 um die Querachse 6 aus einer angehobenen Ruhestellung, die in Fig. 1 zu erkennen ist, in eine abgesenkte Sägestellung, die hier nicht dargestellt ist, und umgekehrt geschwenkt. Das Sägeaggregat 5 ist dabei in Richtung der Ruhestellung, also nach oben hin vorgespannt, insbesondere durch eine Feder. Dadurch kehrt das Sägeaggregat 5, wenn man es losläßt, von selbst wieder in die angehobene Ruhestellung zurück.

Das Sägeaggregat 5 weist auf,
- einen Betätigungshandgriff 7,
- einen Antriebsmotor 8
- ein vom Antriebsmotor 8 angetriebenes, auf einer Welle 9 gelagertes Sägeblatt 10,
- eine das Sägeblatt 10 von oben her etwa über die Hälfte abdeckende feststehende Schutzhaube 11,
- eine Pendelschutzhaube 12, die in der in Fig. 1 dargestellten Ruhestellung den unteren Teil des Zahnkranzes des Sägeblattes 10 abdeckt,
- einen Absaugstutzen 13 einer Staubfangvorrichtung und
- eine im Bereich zwischen der Halterung 4 und der Welle 9 unterhalb der feststehenden Schutzhaube 11 angeordnete bewegliche Staubfanghaube 14.

Letzteres ist eine besondere Ausstattung der Kappsäge, die nicht immer verwirklicht sein muß, aber in besonders zweckmäßiger Weise hier verwirklicht ist.

Die dargestellte Kappsäge hat neben der zuvor bereits beschriebenen Kappfunktion eine Gehrungsfunktion. Es handelt sich also zunächst bereits um eine Kapp- und Gehrungssäge.

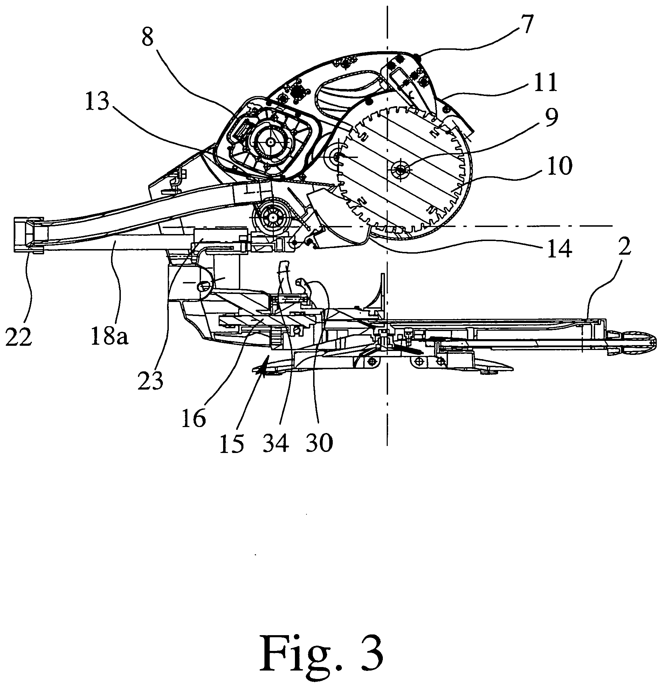

Dazu weist die Kappsäge an der Halterung 4 ihrerseits eine Neigungsverstellung 15 auf. Mit der Neigungsverstellung 15 läßt sich das Sägeaggregat 5 gegenüber dem Träger 1 um eine in Sägerichtung verlaufende, horizontale Neigungs-Schwenkachse 16 schwenken. Fig. 3 zeigt die Neigungs-Schwenkachse 16 körperlich vorhanden. Grundsätzlich ist auch eine kulissenartige Gestaltung möglich, bei der die Neigungs-Schwenkachse 16 nur geometrisch vorhanden ist und die Schwenkbewegung um diese virtuelle Schwenkachse über andere Konstruktionsmittel verwirklicht wird.

An der Neigungsverstellung 15 erkennt man in Fig. 1 eine Winkelskala 17, an der man den eingestellten Neigungswinkel ablesen kann. Durch die Neigung um die Neigungs-Schwenkachse 16 läßt sich der Gehrungswinkel des auszuführenden Sägeschnittes einstellen und an der Winkelskala 17 ablesen.

Die dargestellte und bevorzugte Kappsäge hat jedoch nicht nur eine Kappfunktion und eine Gehrungsfunktion, sie hat auch eine Zugfunktion. Das Sägeaggregat 5 ist an der Halterung 4 nicht nur mittels der Querachse 6 schwenkbar gelagert, sondern zusätzlich auch noch mittels einer in Sägerichtung verlaufenden Zugführung 18 aus zwei parallel zueinander verlaufenden Zugstangen 18a, b verschiebbar gelagert. Mit dieser Zugfunktion läßt sich der vom Sägeaggregat 5 ausführbare Sägeschnitt verlängern.

Das dargestellte und bevorzugte Ausführungsbeispiel zeigt am Träger 1 einen eingelassenen Drehteller 19 mit einem nach vorne vorspringenden Auslegerarm 20 und mit einem Eintauchschlitz 21, in den in Sägestellung der Rand des Sägeblattes 10 eintritt. Die Länge des Eintauchschlitzes 21 ist wesentlich größer als es für den Durchmesser des Sägeblattes 10 erforderlich ist. Das liegt an der zuvor erläuterten Zugführung 18, die eben auch ein Ziehen des Sägeblattes 10 durch das Werkstück über einen bestimmten Weg erlaubt.

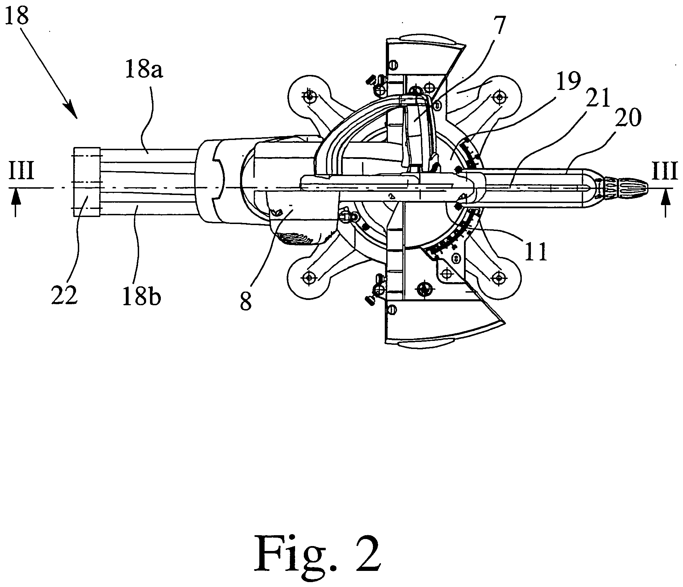

Fig. 2 zeigt in der Draufsicht hier zwei parallel zueinander liegende Zugstangen 18a,b, die die Zugführung 18 bilden und rückwärtig mittels eines Abstandshalters 22 fest miteinander verbunden sind. Die Zugstangen 18a,b sind mit dem Sägeaggregat 5 fest verbunden und laufen an der Halterung 4 in in Fig. 3 erkennbaren Führungen 23.

Bei einer Radialarmsäge, die also keine Kappfunktion, nur eine Zugfunktion und ggf. eine Gehrungsfunktion hat, ist auch eine kinematisch umgekehrte Anordnung mit feststehenden Zugstangen und daran mittels Führungen verschiebbar geführtem Sägeaggregat möglich.

Die voranstehenden Ausführungen betreffen die dargestellte Kapp-, Gehrungs- und Zugsäge im allgemeinen. Die in der vorliegenden Anmeldung betroffene Erfindung wird nachfolgend beschrieben.

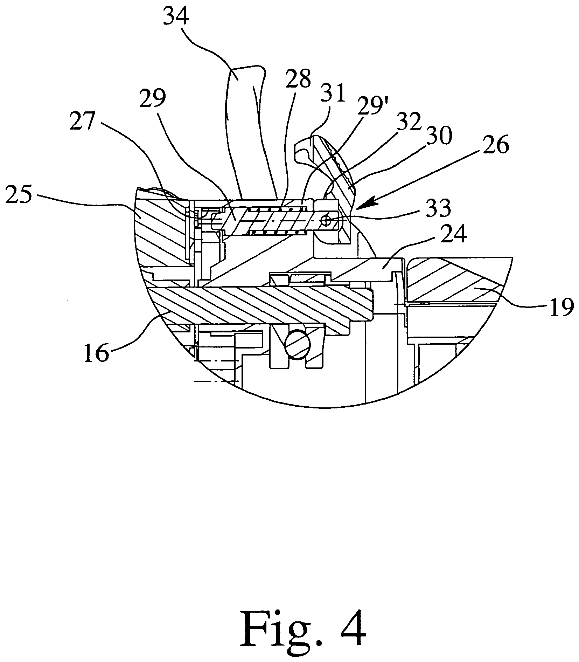

Die ausschnittweise Darstellung in den Fig. 4, 5 und 6 befaßt sich nun im einzelnen mit der Neigungsverstellung 15.

Dargestellt ist, daß die Neigungsverstellung 15 ein mit dem Träger 1 verbundenes feststehendes Teil 24 und ein mit der Halterung 4 verbundenes neigungsschwenkbares Teil 25 aufweist. An einem der beiden Teile 24, 25, hier und nach bevorzugter Lehre am feststehenden Teil 24, das mit dem Träger 1 verbunden ist, befindet sich ein Rastelement 26. Am gegenüberliegenden Teil, hier also am schwenkbaren Teil 25, befindet sich an jeder einer definierten Neigungsposition entsprechenden Stelle eine zum Rastelement 26 passende Gegenrast 27. Dies ist im dargestellten Ausführungsbeispiel eine axial offene Ausnehmung in einer eingesetzten Scheibe.

Grundsätzlich kann es nur eine einzige Gegenraste 27 geben. Diese wird dann normalerweise in der aufrechten Position des Sägeaggregates 5, also bei der Neigungsstellung ± 0° liegen. Häufig sind aber mehrere Gegenrasten 27 vorgesehen, beispielsweise für ± 0°, +45°, -45°.

Das Rastelement 26 weist einen mit einer Rückholfeder 28 in Einrastrichtung federbelasteten, mit der Gegenraste 27 in Eingriff kommenden Rastbolzen 29 auf. Der Rastbolzen 29 ist durch eine manuelle Handhabung entgegen der Federbelastung aus der Gegenraste 27 aushebbar. Das geschieht über einen am Rastbolzen 29 endseitig schwenkbar angelenkten Rastbetätigungshebel 30. Dieser ist im dargestellten Ausführungsbeispiel als Kipphebel oder als ein Schnellspannhebel ausgeführt.

Fig. 4 zeigt die Normalstellung, in der der Rastbolzen 29 in der Gegenraste 27 eingerastet ist. Man erkennt die Führung des Rastbolzens 29 in einer Fassung 29' am Träger 1. In der Fassung 29' erkennt man auch die als Schraubendruckfeder ausgeführte Rückholfeder 28. Das rechte Ende des Rastbolzens 29 ragt nach rechts aus der Fassung 29' heraus. Dort befindet sich ein Schwenkgelenk 33, mit dessen Hilfe hier der Rastbetätigungshebel 30 angelenkt ist.

Der Rastbetätigungshebel 30 weist ein in Fig. 4 nach oben ragendes Handbetätigungsende 31 auf. Geht man von der Einraststellung aus, in der der Rastbolzen 29 mit der Gegenraste 27 in Eingriff steht (Fig. 4), so gibt es für den Rastbetätigungshebel 30 zwei Bewegungsmöglichkeiten.

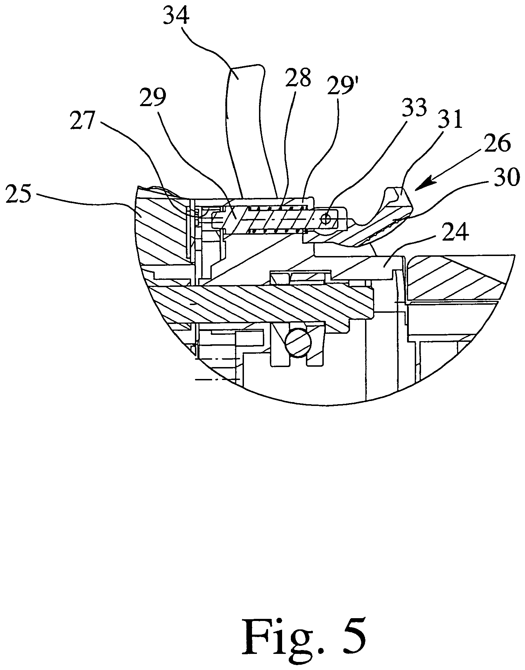

Durch die eine Betätigung am Handbetätigungsende 31, und zwar von Fig. 4 ausgehend nach rechts zur Darstellung in Fig. 5, wird der Rastbolzen 29 aus der Gegenraste 27 nur gegen Federkraft ausgehoben. Bei Freigabe des Handbetätigungsendes 31 des Rastbetätigungshebels 30 kehrt der Rastbolzen 29 unter Federkraft in Einrastrichtung zurück. Steht die Gegenraste 27 an derselben Stelle, so tritt der Rastbolzen 29 unter Federkraft wieder in die Gegenraste 27 ein. Ist das schwenkbare Teil 25 zwischenzeitlich geschwenkt worden, so wird die Spitze des Rastbolzens 29 nach links gegen die entsprechende Fläche gedrückt und rastet später in der nächsten Gegenraste 27 wieder ein.

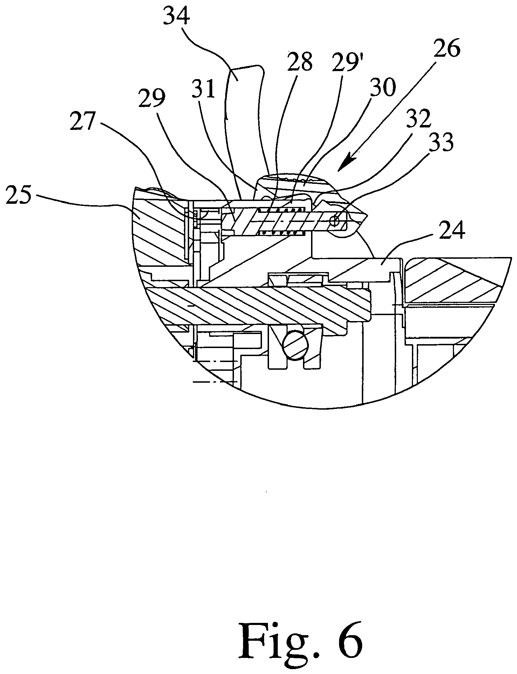

Durch eine der ersten Betätigung im wesentlichen entgegengerichtete Betätigung, von Fig. 4 ausgehend nach links zu Fig. 6 hin, ist der Rastbolzen 29 zwar ebenfalls aus der Gegenraste 27 gegen Federkraft aushebbar. Hier ist allerdings die Gestaltung so getroffen, daß die diesbezügliche Bewegung des Rastbetätigungshebels 30 dazu führt, daß der Rastbolzen 29 in der ausgehobenen Stellung blockiert wird. Dies geschieht bei gleichbleibender Betätigung, also im wesentlichen ohne Änderung der Betätigungsrichtung.

Man erkennt am Vergleich von Fig. 4 und 5, daß die erste Betätigung für das temporäre Ausrasten ein Ziehen am Handbetätigungsende 31 des Rastbetätigungshebels 30 nach rechts ist. Demgegenüber ist die entgegengerichtete Betätigung für die permanente Ausrastung des Rastbolzens 29 ein Drücken auf das Handbetätigungsende 31 des Rastbetätigungshebels 30, so daß dieser von Fig. 4 aus nach links in die in Fig. 6 gezeigte Stellung geschwenkt wird.

Das dargestellte und bevorzugte Ausführungsbeispiel zeigt, daß der hier als Kipphebel ausgeführte Rasthebel zur Blockierung in der ausgehobenen Stellung eine entsprechende Formschlußausbildung 32 nahe dem Schwenkgelenk 33 aufweist. Bei der in Fig. 6 dargestellten Position des Rastbetätigungshebels 30 steht die Formschlußausbildung 32 mit dem Rand der Fassung 29' in Eingriff, so daß der Rastbetätigungshebel 30 hier blockiert ist. Man muß wieder an ihm ziehen, um ihn in Richtung der in Fig. 4 dargestellten Einraststellung zu bewegen, um diese Blockierung freizugeben.

Die Darstellung in Fig. 3 läßt die Anordnung des Rastelementes 26 an der Kappsäge insgesamt erkennen. Man erkennt, daß das Rastelement 26 auf der der Werkstückauflagefläche 2 zugewandten Seite der Halterung 4 angeordnet und der Rastbetätigungshebel 30 von vorne aus über die Werkstückauflagefläche 2 hinweg greifend betätigbar ist.

Schließlich ist noch zu erwähnen, daß sich an der Neigungsverstellung 15 auch noch ein weiterer Klemmhebel 34 befindet, der dazu dient, mit der Neigungsverstellung 15 beliebige Neigungswinkel einzustellen und lediglich kraftschlüssig durch Reibung zu fixieren.

## Patentansprüche

1. Kappsäge mit
einem Träger (1), der eine Werkstückauflagefläche (2) bildet,
einer am Träger (1) angebrachten Halterung (4) und
einem mittels der Halterung (4) oberhalb des Trägers (1) angebrachten Sägeaggregat (5),
wobei an der Halterung (4) eine Neigungsverstellung (15) vorgesehen ist, mit der das Sägeaggregat (5) gegenüber dem Träger (1) um eine in Sägerichtung verlaufende horizontale Neigungs-Schwenkachse (16) schwenkbar und in mindestens einer definierten Neigungsposition einrastend fixierbar ist,
wobei die Neigungsverstellung (15) ein mit dem Träger (1) verbundenes feststehendes Teil (24) und ein mit der Halterung (4) verbundenes neigungsschwenkbares Teil (25) aufweist,
wobei an einem der Teile (24, 25), vorzugsweise am feststehenden Teil (24), ein Rastelement (26) und am anderen der Teile (24, 25), vorzugsweise am schwenkbaren Teil (25), an jeder einer definierten Neigungsposition entsprechenden Stelle eine zum Rastelement (26) passende Gegenraste (27) vorgesehen ist,
wobei das Rastelement (26) in Einrastrichtung federbelastet, durch eine manuelle Handhabung entgegen der Federbelastung aus der Gegenraste (27) aushebbar und in der ausgehobenen Stellung derart blockierbar ist, daß die Blockierung durch eine manuelle Handhabung wieder lösbar ist,
wobei das Rastelement (26) einen mit einer Rückholfeder (28) in Einrastrichtung federbelasteten, mit der Gegenraste (27) in Eingriff kommenden Rastbolzen (29) und einen am Rastbolzen (29) endseitig angeordneten Rastbetätigungshebel (30) aufweist, **dadurch gekennzeichnet, daß** der Rastbetätigungshebel (30) endseitig am Rastbolzen (29) schwenkbar angelenkt ist, daß der Rastbetätigungshebel (30) ein Handbetätigungsende (31) aufweist und daß, ausgehend von der Einraststellung, in der der Rastbolzen (29) mit der Gegenraste (27) in Eingriff steht,
- durch eine erste Betätigung am Handbetätigungsende (31) des Rastbetätigungshebels (30) der Rastbolzen (29) aus der Gegenraste (27) nur gegen Federkraft aushebbar ist und sich bei Freigabe des Handbetätigungsendes (31) in Einrastrichtung zurückbewegt, und
- durch eine der ersten Betätigung im wesentlichen entgegengerichtete Betätigung am Handbetätigungsende (31) des Rastbetätigungshebels (30) der Rastbolzen (29) aus der Gegenraste (27) gegen Federkraft aushebbar und in einem Zug, also im wesentlichen ohne Änderung der Betätigungsrichtung. in der ausgehobenen Stellung blockierbar ist.

2. Kappsäge nach Anspruch 1, **dadurch gekennzeichnet,**
**daß** die erste Betätigung ein Ziehen am Handbetätigungsende (31) des Rastbetätigungshebels (30) und die entgegengerichtete Betätigung ein Drücken auf das Handbetätigungsende (31) des Rastbetätigungshebels (30) ist.

3. Kappsäge nach Anspruch 1 oder 2, **dadurch gekennzeichnet,**
**daß** der Rastbetätigungshebel (30) als Kipphebel ausgeführt ist und zur Blockierung in der ausgehobenen Stellung eine entsprechende Formschlußausbildung (32) nahe dem Schwenkgelenk (33) zum Rastbolzen (29) hin aufweist.

4. Kappsäge nach einem der Ansprüche 1 bis 3, **dadurch gekennzeichnet,**
**daß** das Rastelement (26) auf der der Werkstückauflagefläche (2) zugewandten Seite der Halterung (4) angeordnet und der Rastbetätigungshebel (30) von vorne aus über die Werkstückauflagefläche (2) hinweg greifend betätigbar ist.

## Claims

1. Crosscut saw having
a carrier (1) which forms a workpiece support surface (2),
a holder (4) attached to the carrier (1), and
a saw unit (5) attached by means of the holder (4) above the carrier (1), wherein an inclination adjustment means (15), by way of which the saw unit (5) is pivotable with respect to the carrier (1) about a horizontal inclination pivot axis (16) extending in the sawing direction and is fixable in a latching manner in at least one defined inclination position, is provided on the holder (4),
wherein the inclination adjustment means (15) has a stationary part (24) connected to the carrier (1) and a part (25) that is pivotable in terms of inclination connected to the holder (4),
wherein a latching element (26) is provided on one of the parts (24, 25), preferably on the stationary part (24), and a counterpart catch (27) suitable for the latching element (26) is provided on the other of the parts (24, 25), preferably on the pivotable part (25), at each point corresponding to a defined inclination position,
wherein the latching element (26) is spring-loaded in the latching direction, can be lifted out of the counterpart catch (27) by manual handling counter to the spring loading and can be locked in the lifted-out position in such a manner that the locking can be released again by manual handling, wherein the latching element (26) has a latching bolt (29) which is spring-loaded in the latching direction by a restoring spring (28) and comes into engagement with the counterpart catch (27), and a latching actuating lever (30) arranged on the end side of the latching bolt (29),
**characterized in that** the latching actuating lever (30) is coupled pivotably on the end side of the latching bolt (29),
**in that** the latching actuating lever (30) has a manual actuating end (31) and **in that**, starting from the latching position, in which the latching bolt (29) is in engagement with the counterpart catch (27),
- by a first actuation on the manual actuating end (31) of the latching actuating lever (30), the latching bolt (29) can only be lifted out of the counterpart catch (27) counter to spring force and, when the manual actuating end (31) is released, moves back in the latching direction, and
- by an actuation, substantially oppositely directed to the first actuation, on the manual actuating end (31) of the latching actuating lever (30), the latching bolt (29) can be lifted out of the counterpart catch (27) counter to spring force and can be locked at once in the lifted-out position, i.e. substantially without a change in the actuating direction.

2. Crosscut saw according to Claim 1, **characterized in that** the first actuation involves pulling on the manual actuating end (31) of the latching actuating lever (30), and the oppositely directed actuation involves pressing against the manual actuating end (31) of the latching actuating lever (30).

3. Crosscut saw according to Claim 1 or 2, **characterized in that** the latching actuating lever (30) is embodied as a tilting lever and, for the locking in the lifted-out position, has a corresponding interlocking connection formation (32) in the vicinity of the pivoting joint (33) towards the latching bolt (29).

4. Crosscut saw according to one of Claims 1 to 3, **characterized in that** the latching element (26) is arranged on that side of the holder (4) which faces the workpiece support surface (2), and the latching actuating lever (30) can be actuated from the front in a manner reaching beyond the workpiece support surface (2).

## Revendications

1. Scie à onglet
avec un support (1), qui forme une surface d'appui (2) d'une pièce à travailler, montée sur le support (1), une fixation (4) et
monté sur la fixation (4), par-dessus le support (1), un agrégat de sciage (5), dans laquelle une installation de réglage de l'inclinaison (15) est adaptée sur la fixation (4), avec l'agrégat de sciage (5) en face du support (1), pour qu'un axe de pivotement (16) s'étendant horizontalement selon la direction de sciage, puisse être amené dans au moins une position d'inclinaison et y être fixé en position par encliquetage,
dans laquelle l'installation de réglage de l'inclinaison (15) comporte une pièce fixe (24), solidaire du support (1) et une pièce (25) pivotante en fonction de l'inclinaison et solidaire de la fixation (4),
dans laquelle sur au moins une des pièces (24, 25), de préférence monté sur la pièce fixe (24), est prévu un élément d'encliquetage (26) et sur l'autre des pièces (24, 25), de préférence, monté sur la pièce pivotante (25), dans chacune des positions d'inclinaison définies pour l'encliquetage, est prévue une contre-pièce d'encliquetage (27), correspondant à la position de l'élément d'encliquetage (26),
dans laquelle l'élément d'encliquetage (26) est contraint par ressort dans la direction d'encliquetage, peut être dégagée de la contre-pièce d'encliquetage (27) par une sollicitation manuelle et peut être bloquée dans la position libérée, et peut à nouveau être bloquée dans la position relevée de manière que ce blocage soit effectué par une action manuelle,
dans laquelle l'élément d'encliquetage (26) comporte un levier d'actionnement (30) agencé pour entrer en contact avec un boulon d'encliquetage (29) pourvu d'un ressort de rappel (28) et pouvant être amené en contact avec l'extrémité du boulon d'encliquetage (29), dans la contre-pièce d'encliquetage (27), **caractérisée en ce que**, le levier d'actionnement (30) est articulé pour pivoter d'un côté sur le boulon d'encliquetage (29),
**en ce que** le levier d'actionnement (30) comporte une extrémité d'actionnement manuel (31) et **en ce que**, à la sortie de la position d'encliquetage dans laquelle le boulon d'encliquetage (29) est couplé avec la contre la contre-pièce d'encliquetage (27)
- le boulon d'encliquetage (29) ne peut être dégagé de la contre-pièce d'encliquetage (27) que contre l'application d'une force ressort, au moyen d'une première activation sur l'extrémité d'actionnement manuel (31) appliquée au levier d'actionnement (30), et qu'il retourne dans la position d'encliquetage lors de la libération de l'extrémité d'actionnement manuel (31), et
- le boulon d'encliquetage (29) peut être dégagé de la contre-pièce d'encliquetage (27) contre l'application d'une force ressort et ne peut être retiré, en l'occurrence sans modification de la direction d'actionnement, dans la position où il peut être bloqué, que par une activation opposée à la première activation, en l'occurrence dans la direction opposée à l'activation sur l'extrémité d'actionnement manuel (31), appliquée sur le levier d'actionnement (30).

2. Scie à onglet selon la revendication 1, **caractérisée en ce que**,
la première activation est une traction exercée sur l'extrémité d'actionnement manuel (31) appliquée sur le levier d'actionnement (30) et que l'action inverse est une poussée exercée sur l'extrémité d'actionnement manuel (31), appliquée sur le levier d'actionnement (30).

3. Scie à onglet selon l'une des revendications 1 ou 2, **caractérisée en ce que**,
le levier d'actionnement (30) est un levier pivotant et comporte une structure de forme complémentaire appropriée (32), à proximité de l'articulation (33) avec le boulon d'encliquetage (29) pour assurer le blocage dans la position dégagée.

4. Scie à onglet selon l'une des revendications 1 à 3, **caractérisée en ce que**,
l'élément d'encliquetage (26) est disposé sur le côté de la fixation (4) orienté vers la surface d'appui (2) d'une pièce à travailler, et que le levier d'actionnement (30) peut être saisi et actionné depuis l'avant par-dessus la surface d'appui (2) d'une pièce à travailler.
